(19) **Europäisches Patentamt**

**European Patent Office**

**Office européen des brevets**

(11) Veröffentlichungsnummer: **0 344 427 B1**

(12) **EUROPÄISCHE PATENTSCHRIFT**

(45) Veröffentlichungstag der Patentschrift: **21.06.95**

(21) Anmeldenummer: **89105748.1**

(22) Anmeldetag: **01.04.89**

(51) Int. Cl.⁶: **C08J 5/12**, C08J 5/10, C08L 77/00, C08L 13/00

(54) Verfahren zur Herstellung eines chemischen Verbundes zwischen Formmassen auf Basis von aliphatischen Polyamiden einerseits und Carboxylgruppen enthaltenden Kautschuken andererseits sowie die nach diesem Verfahren hergestellten Werkstoffe.

(30) Priorität: **28.05.88 DE 3818151**

(43) Veröffentlichungstag der Anmeldung:
**06.12.89 Patentblatt 89/49**

(45) Bekanntmachung des Hinweises auf die Patenterteilung:
**21.06.95 Patentblatt 95/25**

(84) Benannte Vertragsstaaten:
**AT BE CH DE ES FR GB IT LI NL SE**

(56) Entgegenhaltungen:
**EP-A- 0 142 930**
**US-A- 4 174 358**

**PLASDOC - CENTRAL PATENTS INDEX - BASIC ABSTRACTS JOURNAL, 17. Juli 1985, LONDON, GB ; WEEK 8521, 480, no. 85-126078/21 & JP-A-60064845**

(73) Patentinhaber: **HÜLS AKTIENGESELLSCHAFT**

**D-45764 Marl (DE)**

(72) Erfinder: **Grosse-Puppendahl, Thomas**
**Stettiner Strasse 10**
**D-4358 Haltern (DE)**
Erfinder: **Jadamus, Hans, Dr.**
**Hervester Strasse 8**
**D-4370 Marl (DE)**
Erfinder: **Richter, Klaus-Peter, Dr.**
**Erlbrüggestrasse 38**
**D-4370 Marl (DE)**
Erfinder: **Gerth, Christian, Dr.**
**Bruktererstrasse 8**
**D-4358 Haltern (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung eines festen Verbundes zwischen thermoplastischen Formmassen auf Basis von aliphatischen Polyamiden einerseits und funktionalisierten Kautschuken andererseits sowie die nach diesem Verfahren erhaltenen Werkstoffe.

Verbundwerkstoffe aus thermoplastisch steifen und gummielastischen Formstoffen werden üblicherweise durch Kleben, Verschrauben, Nieten oder mechanisches Verkrallen zusammengefügt. In neuerer Zeit sind interessante Verfahren zur Herstellung eines chemischen Verbundes zwischen Formmassen auf Basis von Polyphenylenethern (PPE) und bestimmten Doppelbindungen enthaltenden, mit Schwefel bzw. Peroxid vulkanisierbaren Kautschuken entwickelt worden (vgl. DE-OS 36 02 705 und deutsche Patentanmeldung P 37 39 891.0).

Die erzielten Haftfestigkeitswerte sind beachtlich; allerdings ist die Beständigkeit der PPE-Formmassen gegenüber Lösemitteln ebenso noch unbefriedigend wie ihre Stabilität bei Bewitterung.

Grundsätzlich könnte man daran denken, andere thermoplastische Formmassen bei diesen Verfahren einzusetzen, die bekannterweise diesen Anforderungen besser gerecht werden. Es hat sich jedoch gezeigt, daß sich beispielsweise mit Polyamiden (PA), die bekanntlich gegenüber Lösemitteln beständig sind, unter den als wesentlich erkannten Verfahrensbedingungen keine ausreichenden Haftungswerte erzielen lassen (siehe Vergleichsversuche A und B). Es erschien daher nicht möglich, Verbunde zwischen Polyamiden und Kautschuken herzustellen, die neben einer ausreichenden Haftungsfestigkeit eine gute Beständigkeit gegenüber Lösemitteln und Bewitterung besitzen.

In der EP-A- 0 142 930 wird ein weg aufgezeigt, wie Verbunde aus Polyamiden und EPDM-Elastomeren hergestellt werden können. Hierbei wird dem Kautschuk als Vulkanisationsmittel ein Gemisch aus Dicumylperoxid und N,N'-m-Phenylendimaleinimid zugesetzt. Die erhaltenen Haftfestigkeiten sind jedoch für viele technische Anwendungen zu gering.

Die US-A-4 174 358 beschreibt schlagzähe Blends aus Polyamid und funktionalisierten Kautschuken. Sie lehrt, daß Säureanhydrid- oder Carboxylgruppen, die auf ein Kautschukmolekül aufgebracht sind, als Haftstellen zu Polyamid fungieren können, wenn sie durch Scherung in einem Mischaggregat zusammengebracht werden. Über die Haftfestigkeit an der Phasengrenzfläche zwischen Polyamid und Kautschuk werden keine Angaben gemacht.

Es wurde jetzt überraschend ein Verfahren gefunden, mit dem sehr feste Verbunde hergestellt werden können. Dieses besteht darin, daß man von einer Kautschukzusammensetzung ausgeht, die - bezogen auf 100 Gewichtsteile eines mit Carboxylgruppen funktionalisierten Kautschuks -

- 10 bis 300 Gewichtsteile Füllstoffe
- 1 bis 10 Gewichtsteile peroxidische Vulkanisationsmittel
- ggf. bis zu 4 Gewichtsteile Vulkanisationsaktivatoren
- und gegebenenfalls Weichmacher

enthält, man einen Thermoplast einsetzt, der mindestens 30 Gewichtsprozent aliphatische Polyamide enthält, und man den Verbund durch Covulkanisation der PA-haltigen thermoplastischen Formmasse mit der Kautschukzusammensetzung herstellt.

Vorzugsweise handelt es sich um einen EP(D)M- oder NBR-Kautschuk. Als Polyamid setzt man vorzugsweise die Typen PA 46, PA 6, PA 66, PA 12, PA 612, PA 11 und/oder PA 610 ein, wobei $NH_2$-Endgruppen überwiegen. Bis zu 70 Prozent des Polyamids können durch Polyphenylenether ersetzt sein. Die Covulkanisation des Thermoplasten und des Kautschukes wird vorzugsweise bei Temperaturen zwischen 140 und 200 °C in 2 bis 30 Minuten, insbesondere bei Temperaturen zwischen 150 und 180 °C in 5 bis 10 Minuten, durchgeführt. Gegenstand der Erfindung sind schließlich auch die Werkstoffe gemäß Anspruch 10.

Das erfindungsgemäße Verfahren zeichnet sich durch folgende Vorteile aus:
- Es können nicht nur Polyamide, sondern auch PA/PPE-Formmassen eingesetzt werden.
- Der Verbund ist vorzugsweise in wenigen Minuten hergestellt.
- Die im Verbundsystem eingesetzen PA-Formmassen und Kautschuke sind beständig gegen Lösemittel, Benzin etc. und auch im Außenbereich problemlos einsetzbar.
- Der Verbund ist so stark, daß es im Testfall üblicherweise zu einem Kohäsionsbruch im Gummi, nicht jedoch zu einer Trennung an der Phasengrenzfläche kommt.

Im folgenden soll zunächst die Zusammensetzung der PA-haltigen Formmassen mit ihren Komponenten

a) Polyamide
b) gegebenenfalls Polyphenylenether (PPE)

c) Zusatzstoffe

beschrieben werden.

Die erfindungsgemäß verwendeten Polyamide a) weisen in ihrer Hauptkette -CO-NH-Bindungen auf. Es kommen alle Polyamide in Frage, die durch Erhitzen geschmolzen werden können. Spezielle Beispiele für geeignete Polyamide sind PA 46, PA 6, PA 66, PA 12, PA 612, PA 11 und PA 610. Die Polyamide werden in bekannter Weise durch Polykondensation hergestellt. Das Verhältnis der COOH- und $NH_2$-Gruppen in Polyamid beträgt vorzugsweise 1 : x mit 100 > x > 1.

Geeignete Polyamid/Polyphenylenether-Formmassen werden durch Schmelzen und Vermischen von mindestens 30 Gewichtsprozent eines Polyamids mit bis zu 70 Gewichtsprozent eines Polyphenylenethers hergestellt. Formmassen auf Basis von Polyamiden und Polyphenylenethern werden z. B. in den DE-OSS 30 27 104 und 35 18 278 sowie in der EP-OS 0 147 874 und EP-PS 0 024 120 beschrieben. Es ist dem Fachmann bekannt, daß diese Formmassen üblicherweise einen Verträglichkeitsvermittler enthalten.

Die Formmassen enthalten gegebenenfalls weitere Zusatzstoffe c) wie Stabilisatoren, Verarbeitungshilfsmittel, Treibmittel, Metallfasern, Ruß, Graphit und Metallflitter, Titandioxid, Farbpigmente und Zinksulfid. Der Anteil der Verstärkungsmittel in den thermoplastischen Formmassen kann bis zu 50 %, der der Flammschutzmittel bis zu 20 % und aller übrigen Zusatzstoffe insgesamt bis zu 10 %, jeweils bezogen auf die gesamte Formmasse, betragen.

Die im erfindungsgemäßen Verfahren eingesetzte Kautschukzusammensetzung enthält einen Carboxylgruppen enthaltenden Kautschuk, der beispielsweise in bekannter Weise durch Carboxylierung mit ungesättigten Säuren oder Säurederivaten wie z. B. Maleinsäure oder Maleinsäureanhydrid hergestellt wird (vgl. z. B. US-PS 4 010 223). Es ist auch möglich, diese Kautschuke durch Copolymerisation mit ungesättigten Säuren wie z. B. Acrylsäure herzustellen. Grundsätzlich sind alle Carboxylgruppen enthaltenden Kautschuke geeignet, die sich auf bekannte Weise herstellen lassen. Bevorzugt werden jedoch carboxylierte EP(D)M- und NBR-Kautschuke.

EP(D)M-Kautschuke sind Kautschuke, die in bekannter Weise durch Polymerisation eines Gemisches aus Ethylen und Propylen und gegebenenfalls eines Diens in Gegenwart eines Ziegler-Natta-Katalysators, wie z. B.

Diethylaluminiumchlorid, hergestellt werden.

Der EPDM-Kautschuk wird etwa durch Polymerisation eines Gemisches aus

mehr als 25 % Ethylen,

mehr als 25 % Propylen und

1 bis 10 % insbesondere 1 bis 3 % eines nicht konjugierten Diens wie Bicyclo(2.2.1)-heptadien, Hexadien-1.4, Dicyclopentadien und insbesondere 5-Ethylidennorbornen hergestellt.

Geeignete EPM-Kautschuke werden z. B. von der Fa. EXXON unter der Bezeichung EXXELOR VA 1803 (Warenzeichen angemeldet) hergestellt. Ein geeigneter EPDM-Kautschuk ist z. B. MSA-modifiziertes BUNA$^R$ AP (Produktbezeichnung: Versuchsprodukt X 4496) der Bunawerke Hüls GmbH, D-4370 Marl.

Nitril-Kautschuke (NBR) werden durch Copolymerisation von 50 bis 80 Gewichtsprozent Butadien und entsprechend 50 bis 20 Gewichtsprozent Acrylnitril hergestellt. Eine besondere Modifikation bilden die Carboxylgruppen enthaltenden Nitrilkautschuke. Es handelt sich hier um Mischpolymerisate aus Butadien, Acrylnitril und Acrylsäure, Methacryl- oder Sorbinsäure.

Die Vulkanisate zeichnen sich durch eine hohe Zugfestigkeit, gute Elastizität und sehr guten Abriebwiderstand aus. Die für Nitrilkautschuke typische Öl- und Lösemittelbeständigkeit wird durch den Zusatz von ungesättigten Säurederivaten bei der Polymerisation nicht beeinträchtigt.

Geeignete NBR-Kautschuke werden z. B. von Goodyear Tire & Rubber Company, Akron, Ohio, USA, unter der Bezeichnung CHEMIGUM$^R$ NX 775 und von BF Goodrich, NV, Arnheim, Niederlande, unter dem Handelsnamen HYCAR$^R$ 1472 hergestellt.

Als Füllstoffe eignen sich alle Stoffe die üblicherweise in EP(D)M- und NBR-Kautschuken eingesetzt werden, wie z. B. Ruß, Kieselsäure, Silikate, Calciumcarbonat, Zinkoxid und Stearinsäure.

Vorzugsweise enthält die Kautschukzusammensetzung bis zu 150 Gewichtsteile Weichmacheröle. Geeignete Weichmacher sind insbesondere naphthenische Öle in einer Menge von vorzugsweise bis zu 50 Gewichtsteilen bezogen auf 100 Gewichtsteile Kautschuk.

Geeignete peroxidische Vulkanisationsmittel sind die dem Fachmann bekannten Peroxide wie z. B. 2,5-Dimethyl-2,5-bis(tert. butylperoxy)hexan, Dicumylperoxid, 4,4-Di-tert.-butylperoxy-n-butylvalerat, 1,1-Di-tert. butylperoxy-3,3,5-trimethyl-cyclohexan und Bis(tert. butylperoxyisopropyl)benzol. Einzelheiten zum Einsatz von peroxidischen Vulkanisationsmitteln sind der Firmenbroschüre "Rubbery Chemical-Crosslinking-Peroxides" der Akzo-Chemie (Erscheinungsdatum: April 1985) zu entnehmen.

Als Vulkanisationaktivitoren eignen sich beispielsweise Triallylcyanurat (TAC) und Acrylate wie Ethylenglykoldimethacrylat (EDMA) und Trimethylolpropantrimethacrylat (TRIM). Bevorzugt werden TAC und/oder EDMA.

Die Fertigung der aus steifen und gummielastischen Formstoffen zusammengesetzen Formteile kann ein- oder zweistufig erfolgen.

Beim zweistufigen Verfahren wird ein Formteil aus dem Thermoplasten, das durch Pressen, Spritzgießen oder Extrudieren hergestellt wurde, mit der ggf. vorgeformten Kautschukmasse beaufschlagt und den Vulkanisationsbedingungen des Kautschuks ausgesetzt. Das Beaufschlagen des steifen Formteils mit dem Kautschuk kann durch Pressen, Spritzgießen oder Extrudieren erfolgen, wobei die Auswahl des Kautschuks bezüglich der Masseviskosität sich nach dem gewählten Formgebungsverfahren richten muß.

Beim zweistufigen Spritzgießverfahren geht man ähnlich wie bei der zweistufigen Herstellung von Zweifarbenspritzteilen vor. Als Einlegeteil verwendet man ein thermoplastisches Formteil. Zylinder und Schnecke der Spritzgießmaschine sind in bekannter Weise für die Kautschukverarbeitung ausgelegt, und das Werkzeug ist auf Vulkanisationstemperatur beheizbar.

Die optimalen Covulkanisationsbedingungen hängen von der gewählten Kautschukmischung, insbesondere ihrem Vulkanisationssystem, und der Kautschukmischung, insbesondere ihrem Vulkanisationssystem, und der Formteilgestaltung ab.

Geeignete Werkzeugtemperaturen liegen zwischen 140 und 200 °C, bevorzugt zwischen 150 und 180 °C. Bei Verwendung von PA-Werkstoffen mit niedrigen Formbeständigkeiten in der Wärme wählt man Temperaturen im unteren Teil der angegebenen Bereiche.

Die Vulkanisationszeiten liegen zwischen 2 und 30 Minuten, vorzugsweise zwischen 5 und 10 Minuten.

Beim Beaufschlagen und Ausvulkanisieren nach dem zweistufigen Extrusionsverfahren wird z. B. ein in der ersten Stufe hergestelltes Profil aus einem PA-Werkstoff, z. B. ein Rohr, mit der Kautschukmasse ummantelt und gegebenenfalls unter Druck ausvulkanisiert. Entsprechend verfährt man mit Platten, Vliesen, Geweben und Seilen.

Beim einstufigen Spritzgießverfahren arbeitet man analog zu dem einstufigen Zweifarbenspritzgießverfahren. In diesem Fall ist eine Spritzgießmaschine für die Thermoplastverarbeitung, die andere für die Kautschukverarbeitung ausgerüstet. Das Werkzeug wird auf die vorgegebene Vulkanisiertemperatur aufgeheizt, die unter der Erstarrungstemperatur des PA-Werkstoffes liegen sollte.

Aus den covulkanisierten Massen lassen sich beispielsweise folgende Gegenstände herstellen:
Gummibeschichtete Walzen, Flansche; Rohr- und Schlauchkupplungen, Dichtungsrahmen, stoß- und strahlungsabsorbierende Bauteile, Federelemente; Schwingungsdämpfer, PA-verstärkte Gummiprofile; Transportbänder, Antriebsriemen, Andruckrollen für Video- und Audio-Band-Geräte; Dichtungen; insbesondere Wellendichtringe, Laufrollen, Kupplungs- und Bremsscheiben, Membranen, Kolben mit Dichtringen verstärkte Faltenbälge, Pumpengehäuse und - klappen.

## 1. PA-Formmassen

### 1.1 VESTAMID[R] X 4887

Das Polyamid 12 erhält man durch Polykondensation von Laurinlactam und anschließende Abstoppung der Reaktion mit Hexamethylendiamin. Das Verhältnis von $NH_2$- zu COOH-Endgruppen beträgt 5 : 1. Die relative Lösungsviskosität beträgt 1,9, gemessen in m-Kresol bei einer Konzentration von 0,5 Polyamid/100 ml.

### 1.2 VESTAMID[R] L 1901

Das Polyamid 12 erhält man durch Polykondensation von Laurinlactam und anschließende Abstoppung der Reaktion mit Dodecandisäure.

Das Verhältnis von $NH_2$- zu COOH-Endgruppen beträgt 1 : 2. Ansonsten entsprechen die Eigenschaften dieses Produktes denen des VESTAMID[R] X 4887.

### 1.3 VESTAMID[R] L 2032

Es handelt sich um ein glasfaserverstärktes PA 12, das zudem Alterungsschutzmittel und Entformungshilfsmittel enthält. Das Verhältnis von $NH_2$- zu COOH-Endgruppen beträgt 1 : 1,7.

### 1.4 VESTAMID[R] X 1852

Es handelt sich um ein PA 12 mit einer relativen Lösungsviskosität von 2,1, gemessen in m-Kresol bei einer Konzentration von 0,5 g Polyamid/100 ml. Das $NH_2$/COOH-Verhältnis beträgt 1 : 2.

### 1.5 VESTAMID[R] D 18

Es handelt sich um ein PA 612 mit einer relativen Viskosität von 1,95. Das Verhältnis von $NH_2$- zu COOH-Gruppen beträgt 10 : 1.

Es handelt sich um Produkte der Hüls Aktiengesellschaft in D-4370 Marl. Weitere Eigenschaften dieser Produkte sind der Produktinformation "VESTAMID[R]" vom Oktober 1986, zu entnehmen.

4

1.6 VESTOBLEND[R]

Die Polyamid/Polyphenylenether-Formmassen werden entsprechend DE-OS 36 15 393 durch Schmelzen und Vermischen von 30 bis 95 Gewichtsprozent eines Polyamids mit 5 bis 70 Gewichtsprozent eines Polyphenylenethers hergestellt. Bei dieser Formmasse handelt es sich um ein Produkt der Hüls AG in D-4370 Marl. Die Eigenschaften dieses Produktes sind der Produktinformation "VESTOBLEND[R]" 3083/12.87 zu entnehmen.

1.7 ULTRAMID[R] A 5

Es handelt sich um ein Polyamid 66 der Fa. BASF, Ludwigshafen. Die Eigenschaften des Produktes sind der Sortimentsübersicht "ULTRAMID[R]", 1979, zu entnehmen.

1.8 ULTRAMID[R] B 4

Es handelt sich um ein Polyamid 6 der Fa. BASF, Ludwigshafen. Die Eigenschaften des Produktes sind ebenfalls der Sortimentsübersicht "ULTRAMID[R]", 1979, zu entnehmen.

1.9 NOVAMID[R] EN 107 J

Bei diesem Produkt handelt es sich um ein hochdiamingeregeltes PA 6 der Fa. Mitsubishi Kasei, Tokio, Japan. Das Verhältnis von $NH_2$- zu COOH-Endgruppen beträgt ca. 22 : 1.

2. Kautschuke

2.1 EXXELOR VA 1803

Es handelt sich um einen MSA-modifizierten EPM-Kautschuk der Fa. Deutsche Exxon Chemical GmbH, Köln. Die Eigenschaften des Produktes sind der Technischen Information "EXXELOR VA" vom 01.03.1988, zu entnehmen.

2.2 Versuchsprodukt X 4496

Dieses Produkt erhält man durch MSA-Modifizierung von BUNA AP 437 (EPDM). Die Eigenschaften sind der Produktinformation "BUNA[R] AP", Dezember 1980, zu entnehmen.

2.3 CHEMIGUM[R] NX 775

Es handelt sich um einen Carboxylgruppen enthaltenden NBR-Kautschuk der Fa. Goodyear Fire & Rubber, Akron, Ohio, USA. Die Eigenschaften des Produktes sind in der Produktinformation "CHEMIGUM[R] NX 775", November 1987, aufgeführt.

2.4 HYCAR[R] 1472

Dieses Produkt wird von der Fa. BF Goodrich, Arnheim, Niederlande, hergestellt. Seine Eigenschaften sind der Produktübersicht "HYCAR[R]", Oktober 1986, zu entnehmen.

Zur Demonstration der Verbundwirkung werden Probekörper hergestellt, indem man gemäß DIN 53 531, Teil 1, aus dem thermoplastischen PA-haltigen Polymer eine Kunststoffplatte herstellt, diese zu einem Drittel mit einer Teflonfolie abdeckt, auf die Platte ein passendes Kautschukfell legt, den Verbund nach dem Preßverfahren herstellt und schließlich Probekörper mit einer Breite von 25 mm aussägt.

Die Zusammensetzung der Kautschuke ist Tabelle 1 und 3 zu entnehmen. In der Tabelle 2 und 4 sind die Versuchsergebnisse aufgetragen. Man erhält grundsätzlich vergleichbare Werte, wenn man den Vulkanisationsaktivator wegläßt.

Tabelle 1: Bestandteile der Kautschuk-Zusammensetzungen 3.1 bis 3.7
(Die Zahlen geben Gewichtsteile an)

| Beispiel | 3.1 | 3.2 | 3.3 | 3.4 | 3.5 | 3.6 | 3.7 |
|---|---|---|---|---|---|---|---|
| Kautschuk 2.1 | 100 | - | - | - | - | - | - |
| Kautschuk 2.2 | - | 100 | 100 | - | - | - | - |
| Kautschuk 2.3 | - | - | - | 100 | 100 | - | - |
| Kautschuk 2.4 | - | - | - | - | - | 100 | 100 |
| Zinkoxid [1] | 5 | 10 | 5 | - | - | - | - |
| Aluminiumsilikat [2] | - | 140 | - | - | - | - | - |
| Juraperle 10 H [3] | - | 60 | - | - | - | - | - |
| Öl [4] | 60 | 50 | 60 | - | - | - | - |
| VULKASIL$^R$ C [5] | - | - | - | - | 40 | - | 40 |
| Silane A 172 [6] | 1,5 | 1,5 | 1,5 | - | - | - | - |
| VULKANOX$^R$ HS [7] | 1,5 | 1,5 | 1,5 | - | - | - | - |
| DUREX$^R$ O [8] | 100 | - | - | - | - | - | - |
| CORAX$^R$ N 550 [9] | - | - | 100 | 40 | - | 40 | - |
| TAC [10] | 1 | 1 | 1 | - | - | - | - |
| Perkadox 14/40 [11] | 7,5 | 7,5 | 7,5 | - | - | - | - |
| EDMA [12] | - | - | - | 0,5 | 0,5 | 0,5 | 0,5 |
| Perkadox BC 40 [13] | - | - | - | 3 | 3 | 3 | 3 |
| Stearinsäure | - | - | - | 1 | 1 | 1 | 1 |

Erläuterungen zu Tabelle 1:

1) Das eingesetzte Zinkoxid wies einen Reinheitsgrad von mehr als 99 % auf. Die Teilchengröße betrug 0,8 bis 1,0 mm.

2) Als Aluminiumsilikat wird kombiniertes China-Clay, Typ POLESTAR[R] 200 R, der Firma ECC International, St. Austell, Cornwall, Großbritannien eingesetzt. Die Eigenschaften des Produktes sind der Firmenbroschüre zu entnehmen.

3) Juraperle 10 H ist ein Füllstoff der Fa. Wingertsberg Füllstoff und Kreidewerk GmbH, Köln-Bayerntal.

4) Als paraffinisches Öl kam Sunpar 150, ein Produkt der Fa. Sunoil Belgien LV, Antwerpen, zur Anwendung.

5) Es wurde Vulkasil C, eine hochaktive Kieselsäure eingesetzt. Dieses Produkt ist erhältlich bei der Bayer AG, D-5090 Leverkusen.

6) Silane A 172 ist der Handelsname für Vinyl-tris-(2-methoxy-ethoxy)silan.

7) Es wurde VULKANOX[R] HS, ein Alterungsschutzmittel der Bayer AG D-5090 Leverkusen, eingesetzt. Es handelt sich um 2,2,4-Trimethyl-1,2-dihydrochinolin.

8) Es wurde DUREX[R] O, ein halbverstärkender Gasruß der Firma Degussa, Hanau, eingesetzt.

9) CORAX[R] N 550 ist ein Produkt der Fa. Degussa, Hanau.

10) TAC (Triallylcyanurat) ist ein Produkt der Fa. Degussa, Hanau.

11) Perkadox 14/40 und Perkadox BC 40 sind Produkte der Fa. Akzo-Chemie.

12) EMDA (Ethylenglykoldimethacrylat) ist ein Produkt der Fa. Degussa, Hanau.

13) Als Peroxid wurde Perkadox BC 40, ein Produkt der Akzo-Chemie, Niederlande, eingesetzt.

Tabelle 2: Eigenschaften der erfindungsgemäßen Verbundwerkstoffe. Die Trennung erfolgt in allen Fällen kohäsiv, d. h. ein Riß der Probekörper erfolgt nicht an der Grenzfläche Kunststoff/-Gummi, sondern innerhalb des Gummiteils

| Kautschuk | Polyamid Werkstoff | Vulkanisations- temperatur in °C | Vulkanisations- zeit in Min. | Trennkraft in N/mm |
|---|---|---|---|---|
| 3.1 | 1.1 | 160 | 25 | 17,0 |
| | 1.2 | 160 | 25 | 14,4 |
| | 1.5 | 180 | 15 | 13,9 |
| | 1.6 | 150 | 30 | 9,7 |
| | 1.7 | 180 | 15 | 17,4 |
| | 1.8 | 180 | 15 | 16,8 |
| 3.2 | 1.9 | 180 | 15 | 14,4 |
| 3.3 | 1.1 | 160 | 25 | 13,1 |
| | 1.4 | 160 | 25 | 12,7 |
| | 1.6 | 150 | 30 | 11,2 |
| 3.4 | 1.1 | 160 | 15 | 16,1 |
| | 1.9 | 180 | 10 | 10,9 |
| 3.5 | 1.1 | 160 | 15 | 16,2 |
| | 1.5 | 180 | 10 | 15,6 |
| 3.6 | 1.1 | 160 | 15 | 11,2 |
| | 1.2 | 160 | 15 | 10,0 |
| | 1.3 | 160 | 15 | 8,8 |
| | 1.4 | 160 | 15 | 8,4 |
| | 1.5 | 180 | 10 | 10,8 |
| 3.7 | 1.6 | 150 | 25 | 10,9 |
| | 1.9 | 180 | 10 | 10,7 |

8

Tabelle 3: Bestandteile der Kautschuk-Zusammensetzungen
(Die Zahlen geben Gewichtsteile an)

| Beispiel | 3.8 | 3.9 | A | B |
|---|---|---|---|---|
| Kautschuk 2.2 | 100.0 | - | 100.0 | |
| Kautschuk 2.3 | - | 100.0 | - | 100.0 |
| ZnO [1] | 10.0 | - | 5.0 | 5.0 |
| Aluminiumsilikat [2] | 140.0 | - | 140.0 | - |
| Juraperle 10 H [3] | 60.0 | - | 60.0 | - |
| Öl [4] | 50.0 | - | 50.0 | - |
| Silane A 172 [6] | 1.5 | - | 1.5 | - |
| VULKANOX[R] HS [7] | 1.5 | - | 1.5 | - |
| Perkadox 14/40 [11] | 7.5 | - | - | - |
| Perkadox BC 40 [11] | - | 3.0 | | - |
| Aktivator TAC [10] | 1.0 | - | - | - |
| Aktivator ED MA [12] | - | 0.5 | | - |
| Stearinsäure | - | 1.0 | 1.0 | 1.0 |
| VULKANOX[R] DDA [14] | - | - | 1.5 | - |
| VULKACIT[R] LDB [15] | - | - | 1.5 | - |
| VULKACIT[R] P extra N[15] | - | - | 0.8 | - |
| VULKACIT[R] Mercapto [15] | - | - | 1.0 | - |
| TMTD 80 [16] | - | - | 1.0 | - |
| Schwefel | - | - | 0.8 | 0.5 |
| VULKASIL[R] C [5] | - | 40.0 | | 40.0 |
| TMTD [16] | - | - | | 3.0 |

Erläuterungen zu Tabelle 3

1) bis 13) siehe Tabelle 1

14) Es wurde VULKANOX[R] DDA, ein Alterungsschutzmittel der Bayer AG, D-5090 Leverkusen, eingesetzt. Es handelt sich um ein styrolisiertes Diphenylamin (SDPA).

15) Als Beschleuniger wurden VULKACIT[R] P (Zink-ethyl-phenyl-di-thiocarbamat), VULKACIT[R] LDB (Zink-dibutyl-dithiocarbamat) und VULKACIT[R] Mercapto (Mercapto-benzothiazol) eingesetzt. Es handelt sich um Produkte der Bayer AG, D-5090 Leverkusen.

16) Es wurde TMTD (Tetramethylthiuramidsulfid) mit dem Handelsnamen RHENOGRAM$^R$ TMTD 80 der Firma Rheinchemie, Mannheim eingesetzt.

Tabelle 4

| Kautschuk | Polyamid | Haftfestigkeit in Schälversuch in N/mm |
|-----------|----------|----------------------------------------|
| 3.8 | 1.1 | 14.6/15.4/13.2 |
| 3.9 | 1.1 | 15.0/15.5/18 |
| A | 1.1 | 0* |
| B | 1.1 | 0* |

* Gummischicht läßt sich ohne Kraftaufwand vom Polyamid trennen ("kein Verbund")

## Patentansprüche

1. Verfahren zur Herstellung eines Verbundes zwischen einem Thermoplasten, der mindestens 30 Gewichtsprozent aliphatische Polyamide enthält, und einem Kautschuk durch Covulkanisation in Gegenwart eines Vulkanisationssystems,
dadurch gekennzeichnet,
daß man von einer Kautschukzusammensetzung ausgeht, die - bezogen auf 100 Gewichtsteile eines Carboxylgruppen enthaltenden Kautschuks -
   - 100 - 300 Gewichtsteile Füllstoffe
   - 1 - 10 Gewichtsteile peroxidische Vulkanisationsmittel
   - gegebenenfalls bis zu 4 Gewichtsteile Vulkanisationsaktivatoren sowie
   - gegebenenfalls Weichmacher enthält.

2. Verfahren gemäß Anspruch 1,
dadurch gekennzeichnet,
daß die Kautschukzusammensetzung als Kautschukbestandteil einen carboxylierten EP(D)M- oder NBR-Kautschuk enthält.

3. Verfahren gemäß den Ansprüchen 1 und 2,
dadurch gekennzeichnet,
daß man als Polyamid PA 46, PA 6, PA 66, PA 12, PA 612, PA 11 und/oder PA 610 einsetzt.

4. Verfahren gemäß den Ansprüchen 1 bis 3,
dadurch gekennzeichnet,
daß das Polyamid COOH- und $NH_2$-Gruppen im Verhältnis 1 : x mit 100 > x > 1 enthält.

5. Verfahren gemäß den Ansprüchen 1 bis 4,
dadurch gekennzeichnet,
daß der Thermoplast bis zu 70 Gewichtsprozent eines Polyphenylenethers enthält.

6. Verfahren gemäß den Ansprüchen 1 bis 5,
dadurch gekennzeichnet,
daß als Zuschlagstoffe der Kautschukzusammensetzung Zinkoxid, Calciumcarbonat, Kieselsäure, Ruß und/oder Aluminiumsilikate verwendet werden.

7. Verfahren gemäß den Ansprüchen 1 bis 6,
dadurch gekennzeichnet,
daß die Kautschukzusammensetzung zusätzlich bis zu 150 Gewichtsteile Weichmacheröle enthält.

**8.** Verfahren gemäß den Ansprüchen 1 bis 7,
dadurch gekennzeichnet,
daß man die Covulkanisation bei Temperaturen zwischen 140 und 200 °C in 2 bis 30 Minuten durchführt.

**9.** Verfahren gemäß Anspruch 8,
dadurch gekennzeichnet,
daß man die Covulkanisation bei 150 bis 180 °C in 5 bis 10 Minuten durchführt.

**10.** Covulkanisate, erhalten nach den Ansprüchen 1 bis 9.

**Claims**

**1.** A process for the production of a bond between a thermoplastic containing at least 30% by weight of aliphatic polyamides and a rubber by covulcanization in the presence of a vulcanization system, characterised in that a rubber composition comprising - based on 100 parts by weight of a carboxyl-containing rubber -
   - 100-300 parts by weight of filler,
   - 1- 10 parts by weight of peroxidic vulcanizing agent,
   - if desired up to 4 parts by weight of vulcanization activator,
   - if desired plasticizer,
   is used as starting material.

**2.** A process according to claim 1, characterised in that the rubber composition contains, as rubber constituent, a carboxylated EP(D)M or NBR rubber.

**3.** A process according to either of claims 1 and 2, characterised in that the polyamide employed is PA 46, PA 6, PA 66, PA 12, PA 612, PA 11 and/or PA 610.

**4.** A process according to any of claims 1 to 3, characterised in that the polyamide contains COOH and $NH_2$ groups in the ratio 1:x where $100 > x > 1$.

**5.** A process according to any of claims 1 to 4, characterised in that the thermoplastic contains up to 70% by weight of a polyphenylene ether.

**6.** A process according to any of claims 1 to 5, characterised in that zinc oxide, calcium carbonate, silicic acid, carbon black and/or aluminium silicate are used as additive in the rubber composition.

**7.** A process according to any of claims 1 to 6, characterised in that the rubber composition additionally contains up to 150 parts by weight of plasticizer oil.

**8.** A process according to any of claims 1 to 7, characterised in that the covulcanization is carried out at temperatures from 140 to 200 °C in from 2 to 30 minutes.

**9.** A process according to claim 8, characterised in that the covulcanization is carried out at from 150 to 180 °C in from 5 to 10 minutes.

**10.** A covulcanizate obtained according to any of claims 1 to 9.

**Revendications**

**1.** Procédé de préparation d'un compound entre un thermoplaste renfermant au moins 30 % en poids de polyamides aliphatiques et un caoutchouc, par co-vulcanisation en présence d'un système vulcanisant, caractérisé en ce que l'on part d'une composition caoutchouteuse qui, relativement à 100 parties en poids d'un caoutchouc renfermant des groupes carboxyle, renferme
   - de 100 à 300 parties en poids de charges,
   - de 1 à 10 parties en poids de vulcanisants peroxydiques,
   - le cas échéant jusqu'à 4 parties en poids d'activants de vulcanisation, ainsi que,

- le cas échéant des plastifiants.

**2.** Procédé selon la revendication 1,
caractérisé en ce que la composition caoutchouteuse renferme, comme constituant caoutchouteux, un caoutchouc EP(D)M ou NBR carboxylé.

**3.** Procédé selon les revendications 1 et 2,
caractérisé en ce que l'on utilise, comme polyamides, les polyamides PA 46, PA 6, PA 66, PA 12, PA 612, PA 11 et/ou PA 610.

**4.** Procédé selon les revendications 1 à 3,
caractérisé en ce que la polyamide renferme des groupes COOH et $NH_2$ dans une proportion de 1 : x, avec 100 > x > 1.

**5.** Procédé selon les revendications 1 à 4,
caractérisé en ce que le thermoplaste renferme jusqu'à 70 % en poids d'un éther polyphénylénique.

**6.** Procédé selon les revendications 1 à 5,
caractérisé en ce que l'on utilise, comme additifs à la composition de caoutchouc, de l'oxyde de zinc, du carbonate de calcium, de l'acide silicique, du noir de fumée et/ou des silicates d'aluminium.

**7.** Procédé selon les revendications 1 à 6,
caractérisé en ce que la composition caoutchouteuse renferme complémentairement jusqu'à 150 parties en poids d'huiles plastifiantes.

**8.** Procédé selon les revendications 1 à 7,
caractérisé en ce que l'on effectue la co-vulcanisation en 2 à 30 minutes, à des températures comprises entre 140 et 200 °C.

**9.** Procédé selon la revendication 8,
caractérisé en ce que l'on effectue la co-vulcanisation en 5 à 10 minutes, à des températures de 150 à 180 °C.

**10.** Les co-vulcanisats obtenus selon les revendications 1 à 9.